# EUROPEAN PATENT APPLICATION

(11) **EP 4 512 684 A1**
(43) Date of publication of application: **26.02.2025**
(21) Application number: 22784977.5
(22) Date of filing: 06.04.2022
(51) Int. Cl.: B60W 60/00, B60W 30/08, G05D 1/00

(54) **VEHICLE FOR PERFORMING MINIMAL RISK MANEUVER, AND METHOD FOR OPERATING VEHICLE**

(30) Priority: 08.04.2021 KR 20210045583
(71) Applicant: Hyundai Motor Company, Seoul 06797 (KR); Kia Corporation, Seoul 06797 (KR)
(72) Inventor: MIN, Young Bin, Gwangmyeong-si Gyeonggi-do 14305 (KR); PARK, Jong Sung, Hwaseong-si Gyeonggi-do 18237 (KR); JANG, Chan Jong, Hwaseong-si Gyeonggi-do 18270 (KR); YOON, Chul Hwan, Seoul 05266 (KR)
(74) Representative: Hoffmann Eitle
(86) International application number: PCT/KR2022/004995
(87) International publication number: WO 2022/216068

(57) **Abstract**

Various embodiments of the present disclosure relate to a vehicle configured to execute a minimal risk maneuver, and a method for operating the vehicle. Disclosed is an autonomous driving vehicle, including: at least one sensor configured to sense surrounding environment of the vehicle to generate surrounding environment information; a processor configured to monitor state of the vehicle to generate vehicle state information and to control autonomous driving of the vehicle; and a controller configured to control operation of the vehicle according to the control of the processor, and the processor may be configured to sense whether a minimal risk maneuver is needed based on at least one among the surrounding environment information and the vehicle state information during autonomous driving of the vehicle; to determine a type of the minimal risk maneuver based on a normally operating function among functions specified for the minimal risk maneuver when the minimal risk maneuver is needed; and to control the vehicle to stop based on the determined type of the minimal risk maneuver.

## Description

### [Technical Field]

The present disclosure relates to a vehicle configured to execute a minimal risk maneuver, and a method for operating the vehicle.

### [Background Art]

Recently, advanced driver assistance systems (ADAS) have been developed to assist drivers in driving. The ADAS has multiple sub-classifications and provides convenience to the driver. Such ADAS is also called autonomous driving or ADS (Automated Driving System).

Meanwhile, an abnormality may occur in the autonomous driving system while the vehicle performs the autonomous driving. The vehicle may get into a dangerous state if appropriate measures are not taken against such abnormality in the autonomous driving system.

### [DISCLOSURE]

### [Technical Problem]

Accordingly, various embodiments of the present disclosure disclose a vehicle that performs a minimal risk maneuver (MRM) to remove (or reduce) a risk and a method for operating the vehicle when a situation in which normal autonomous driving is impossible is detected during autonomous driving.

Various embodiments of the present disclosure disclose a device which stops on a shoulder of a road through the minimal risk maneuver, when a situation in which normal autonomous driving is impossible is detected during the autonomous driving of the vehicle, and a method for operating the device.

Technical objects to be achieved by the present disclosure are not limited to the aforementioned objects, and those skilled in the art to which the present disclosure pertains may evidently understand other technical objects from the following description.

### [Technical Solution]

One embodiment is an autonomous driving vehicle, including: at least one sensor configured to sense surrounding environment of the vehicle to generate surrounding environment information; a processor configured to monitor state of the vehicle to generate vehicle state information and to control autonomous driving of the vehicle; and a controller configured to control operation of the vehicle according to the control of the processor, and the processor may be configured to sense whether a minimal risk maneuver is needed based on at least one among the surrounding environment information and the vehicle state information during autonomous driving of the vehicle, determine a type of the minimal risk maneuver based on a normally operating function among functions specified for the minimal risk maneuver when the minimal risk maneuver is needed and control the vehicle to stop based on the determined type of the minimal risk maneuver, and the functions specified for the minimal risk maneuver may include at least one among a lateral control function, an acceleration function, a deceleration function, a lane change function, and a safe area detection function.

According to an embodiment, the processor may be configured to determine a straight stop type to be the type of the minimum risk maneuver when only the deceleration function operates normally among the specified functions, or when the deceleration function operates normally, and the lateral control function does not operate normally among the specified functions, and control the vehicle to stop using the deceleration function.

According to an embodiment, the processor may be configured to control the vehicle to decelerate based on specified deceleration while maintaining a direction in which the vehicle travels, when the straight stop type is determined to be the type of the minimum risk maneuver.

According to an embodiment, the processor may be configured to check whether a position of a steering wheel of the vehicle is a neutral position, when the straight stop type is determined to be the type of the minimum risk maneuver, and control a yaw rate of the vehicle such that the position of the steering wheel is in a neutral position, when the position of the steering wheel of the vehicle is not a neutral position.

According to an embodiment, the processor may be configured to sense that the position of the steering wheel is changed according to a road condition while the vehicle travels, and the processor may generate lateral acceleration so that the steering wheel of the vehicle returns to a neutral position.

According to an embodiment, the processor may be configured to determine an in-lane stop type to be the type of the minimum risk maneuver when among the specified functions, the deceleration function and the lateral control function operate normally and the lane change function does not operate normally, and control the vehicle to stop using the deceleration function while controlling the vehicle not to be out of a lane in which the vehicle travels using the lateral control function.

According to an embodiment, the processor may be configured to control the vehicle not to be out of the lane in which the vehicle travels using an LKAS (Lane Keeping Assistance System), when the in-lane stop type is determined to be the type of the minimum risk maneuver.

According to an embodiment, the processor may be configured to control an angle of the steering wheel to be maintained, when the processor fails in sensing the lane in which the vehicle travels.

According to an embodiment, the processor may be configured to determine an adjacent lane stop type to be the type of the minimum risk maneuver when among the specified functions, the deceleration function, the lateral control function, and the lane change function normally operate, and the safe area detection function does not normally operate, and control the vehicle to move into a lane adjacent to the lane in which the vehicle travels using the deceleration function, the lateral control function, and the lane change function, and then, to stop in the adjacent lane.

According to an embodiment, the processor may be configured to determine a shoulder stop type or a parking lane stop type to be the type of the minimum risk maneuver according to a type of a safe area nearest to the vehicle when among the specified functions, the deceleration function, the lateral control function, and the lane change function, and the safe area detection function normally operate, control the vehicle to stop in a state in which at least a portion of the vehicle is positioned on the shoulder through the deceleration function, the lateral control function, the lane change function, and the safe area detection function when the shoulder stop type is determined, and control the vehicle to move into a parking lane and to stop within a boundary of the parking lane through the deceleration function, the lateral control function, the lane change function, and the safe area detection function when the parking lane stop type is determined, and the type of the safe area may include at least one among a shoulder and a parking lane.

Another embodiment is a method for operating an autonomous driving vehicle, including sensing surrounding environment of the vehicle during autonomous driving of the vehicle and obtaining surrounding environment information, monitoring a state of the vehicle during the autonomous driving of the vehicle and obtaining vehicle state information, sensing whether a minimal risk maneuver is needed based on at least one among the surrounding environment information and the vehicle state information during autonomous driving of the vehicle, determining a type of the minimal risk maneuver based on a normally operating function among functions specified for the minimal risk maneuver when the minimal risk maneuver is needed and controlling the vehicle to stop based on the determined type of the minimal risk maneuver. Further, the functions specified for the minimal risk maneuver may include at least one among a lateral control function, an acceleration function, a deceleration function, a lane change function, and a safe area detection function.

According to an embodiment, the determining a type of the minimal risk maneuver may include determining a straight stop type to be the type of the minimal risk maneuver when only the deceleration function operates normally among the specified functions, or when the deceleration function operates normally, and the lateral control function does not operate normally among the specified functions, and the controlling the vehicle to stop may include controlling the vehicle to stop using the deceleration function.

According to an embodiment, the controlling the vehicle to stop may further include controlling the vehicle to maintain a direction in which the vehicle travels.

According to an embodiment, the controlling the vehicle to maintain a direction in which the vehicle travels may include: checking whether a position of a steering wheel of the vehicle is a neutral position, when the straight stop type is determined to be the type of the minimum risk maneuver; and controlling a yaw rate of the vehicle such that the position of the steering wheel is a neutral position, when the position of the steering wheel of the vehicle is not a neutral position.

According to an embodiment, the method may further include sensing that the position of the steering wheel is changed according to a road condition while the vehicle travels, and generating lateral acceleration so that the steering wheel of the vehicle returns to a neutral position.

According to an embodiment, the determining a type of the minimal risk maneuver may include determining an in-lane stop type may be determined to be the type of the minimum risk maneuver when among the specified functions, the deceleration function and the lateral control function operate normally and the lane change function does not operate normally, and the controlling the vehicle to stop may include controlling the vehicle to stop using the deceleration function while controlling the vehicle not to be out of a lane in which the vehicle travels using the lateral control function.

According to an embodiment, the controlling the vehicle not to be out of a lane in which the vehicle travels using the lateral control function may include controlling the vehicle not to be out of the lane in which the vehicle travels using an LKAS (Lane Keeping Assistance System).

According to an embodiment, the method may further include controlling an angle of the steering wheel to be maintained so that the vehicle does not move to be out of the lane in which the vehicle travels, when failed in sensing the lane in which the vehicle travels.

According to an embodiment, the determining a type of the minimal risk maneuver may include determining an adjacent lane stop type to be the type of the minimum risk maneuver when among the specified functions, the deceleration function, the lateral control function, and the lane change function normally operate, and the safe area detection function does not normally operate, and the controlling the vehicle to stop may include controlling the vehicle to move into a lane adjacent to the lane in which the vehicle travels using the deceleration function, the lateral control function, and the lane change function, and then, to stop in the adjacent lane.

According to an embodiment, the determining a type of the minimal risk maneuver may include determining a shoulder stop type or a parking lane stop type to be the type of the minimum risk maneuver according to a type of a safe area nearest to the vehicle when among the specified functions, the deceleration function, the lateral control function, and the lane change function, and the safe area detection function normally operate, and the controlling the vehicle to stop may include: controlling the vehicle to stop in a state in which at least a portion of the vehicle is positioned on the shoulder through the deceleration function, the lateral control function, the lane change function, and the safe area detection function, when the shoulder stop type is determined; controlling the vehicle to move into a parking lane and to stop within a boundary of the parking lane through the deceleration function, the lateral control function, the lane change function, and the safe area detection function, when the parking lane stop type is determined, and the type of the safe area may include at least one among a shoulder and a parking lane.

### [Advantageous Effect]

According to various embodiments of the present disclosure, it is possible to improve safety by minimizing a risk of a vehicle through execution of the minimal risk maneuver, when a situation in which normal autonomous driving is impossible is detected during the autonomous driving of the vehicle.

### [Description of Drawings]

FIG. 1 is a block diagram of a vehicle according to various embodiments of the present disclosure.
FIG. 2 is a view illustrating minimal risk maneuver (MRM) types according to various embodiments of the present disclosure.
FIG. 3 is a flowchart illustrating operations of a vehicle according to various embodiments of the present disclosure.
FIG. 4 is a flowchart illustrating execution of the minimal risk maneuver by the vehicle according to various embodiments of the present disclosure.
FIG. 5 is a flowchart illustrating execution of straight stop by the vehicle according to various embodiments of the present disclosure.
FIGS. 6 and 7 are example illustrations of controlling a steering wheel by a vehicle while performing straight stop according to various embodiments of the present disclosure.

### [Mode for Invention]

Hereinafter, embodiments are described in more detail with reference to accompanying drawings.

The construction and operational effect of the present disclosure will be clearly understood from the following detailed description. Prior to describing exemplary embodiments of the present disclosure in detail, it is noted that throughout the drawings the same components will be denoted by the same reference numerals when possible and a detailed description about existing components and functions is omitted when the subject matter of the present disclosure may be obscured by the description.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and embodiments of the present disclosure are not limited thereto.

A shoulder may mean a space between an outermost road boundary (or a boundary of an outermost lane) in a direction in which a vehicle is traveling and a road edge (e.g., kerb, guardrail).

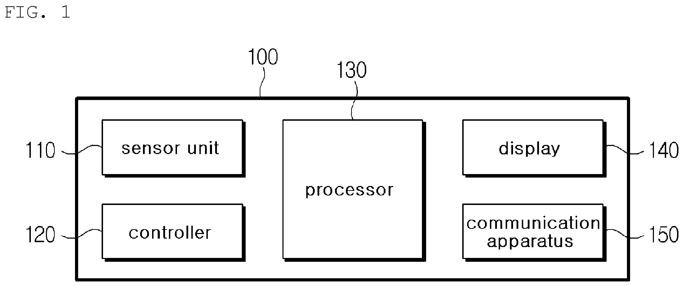

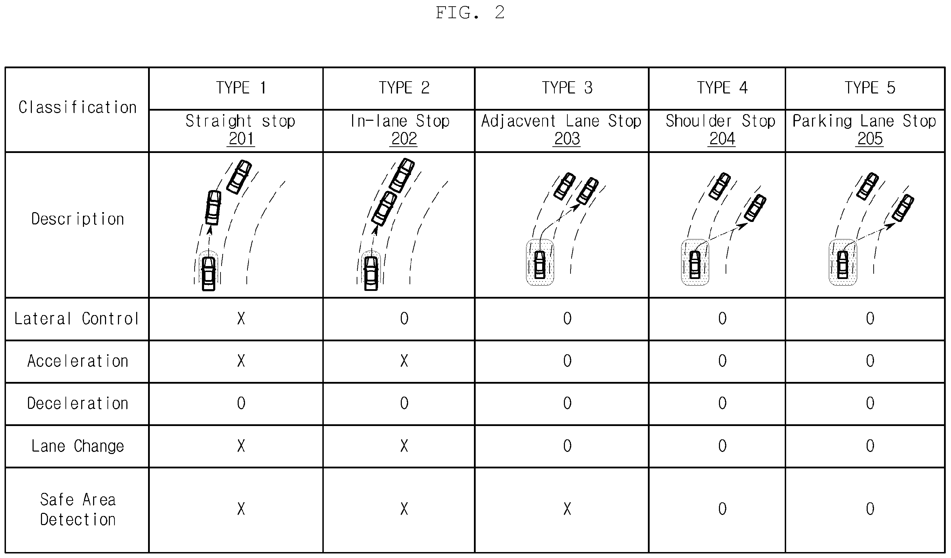

FIG. 1 is a block diagram of a vehicle according to various embodiments of the present disclosure. The configuration of the vehicle illustrated in FIG. 1 is one embodiment, and each component may be configured as one chip, one component, or one electronic circuit, or a combination of chips, components and/or electronic circuits. According to the embodiment, some of the components illustrated in FIG. 1 may be divided into a plurality of components and configured as different chips, different components, or different electronic circuits, and some components may be combined to form one chip, one component, or one electronic circuit. According to the embodiment, some of the components illustrated in FIG. 1 may be omitted or other components not illustrated may be added. At least some of the components of FIG. 1 will be described with reference to the FIGS. 2. FIG. 2 is a view illustrating minimal risk maneuver (MRM) types according to various embodiments of the present disclosure.

Referring to FIG. 1, the vehicle 100 may include a sensor unit 110, a controller 120, a processor 130, a display 140, and a communication apparatus 150.

According to various embodiments, the sensor unit 110 may sense a surrounding environment of the vehicle 100 using at least one sensor, and generate data related to the surrounding environment based on the sensed result. For example, the sensor unit 110 may obtain information on objects around the vehicle (for example, other vehicle, a person, an object, a kerb, a guardrail, a lane, an obstacle) based on the sensed data obtained from at least one sensor. Information on the object around the vehicle may include at least one among a position of the object, a size of the object, a shape of the object, a distance to the object, and a relative speed to the object. The sensor unit 110 may measure a position of the vehicle 100 using at least one sensor. The sensor unit 110 may include, for example, at least one selected among a camera, a light detection and ranging (LIDAR) sensor, a radio detection and ranging (RADAR) sensor, an ultrasonic sensor, an infrared sensor, and a position measurement sensor. The listed sensors are merely examples for helping understanding, and the sensors included in the sensor unit 110 of the present disclosure are not limited thereto.

According to the embodiment, a camera may generate image data which includes an object positioned in front, at a rear and on a side of the vehicle 100, by capturing image around the vehicle. According to the embodiment, the lidar may generate information on an object positioned in front, at a rear and/or on a side of the vehicle 100 using light (or laser). According to the embodiment, the radar may generate information on an object positioned in front, at a rear and/or on a side of the vehicle 100 using electromagnetic waves (or radio waves). According to the embodiment, the ultrasonic sensor may generate information on an object positioned in front, at a rear and/or on a side of the vehicle 100 using ultrasonic waves. According to the embodiment, the infrared sensor may generate information on an object positioned in front, at a rear and/or on a side of the vehicle 100 using infrared rays.

According to the embodiment, the position measurement sensor may measure the current position of the vehicle 100. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

According to various embodiments, the controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safe area detection function, an engine on/off, a power on/off, and a vehicle lock/unlock function.

According to the embodiment, the controller 120 may control at least one component of the vehicle and/or at least one function of the vehicle for autonomous driving and/or a minimal risk maneuver (MRM) of the vehicle 100 according to the control of the processor 130. For example, for the minimal risk maneuver, the controller 120 may control the operation of at least one function among a steering function, an acceleration function, a deceleration function, a lane change function, a lane detection function, a lateral control function, an obstacle recognition and distance detection function, a powertrain control function, and a safe area detection function.

According to various embodiments, the processor 130 may control the overall operation of the vehicle 100. According to the embodiment, the processor 130 may include an electrical control unit (ECU) capable of integrally controlling components in the vehicle 100. For example, the processor 130 may include a central processing unit (CPU) or a micro processing unit (MCU) capable of performing arithmetic processing.

According to various embodiments, when a specified event is generated, the processor 130 may activate the Automated Driving System (ADS) to control components in the vehicle 100 such that the vehicle performs autonomous driving. The specified event may be generated when autonomous driving of the driver is requested, vehicle control authority from the driver is delegated, or a condition specified by the driver and/or designer is satisfied.

According to an embodiment, the processor 130 may determine whether the normal autonomous driving is possible based on at least one among vehicle state information and surrounding environment information, during the autonomous driving. According to an embodiment, from the time when ADS is activated, the processor 130 may obtain vehicle state information indicating whether mechanical and/or electrical faults of components inside the vehicle occur or not, by monitoring mechanical and/or electrical states of components inside the vehicle (e.g., sensors, actuators and the like). The vehicle state information may include information about mechanical states and/or electrical states of components inside the vehicle. For example, the vehicle state information may include information indicating whether functions necessary for autonomous driving can normally operate or not according to mechanical and/or electrical states of components inside the vehicle. According to an embodiment, the processor 130 may obtain environment information around the vehicle through the sensor unit 110, from the time when ADS is activated.

The processor 130 may determine whether functions necessary for autonomous driving are normally operable based on the vehicle state information. Functions required for autonomous driving may include, for example, at least one among a lane detection function, a lane change function, a lateral control function, a deceleration (or brake control) function, a powertrain control function, a safe area detection function, an obstacle recognition function, and a distance sensing function. When the normal operation of at least one among the functions required for autonomous driving is impossible, the processor 130 may determine that normal autonomous driving is impossible. For example, when the obstacle (e.g., other vehicle, other pedestrian) recognition function is impossible to be normally operated, the processor may determine that normal autonomous driving is impossible because collision with an obstacle cannot be prevented.

The processor 130 may determine whether the vehicle state is suitable for general driving conditions based on the vehicle state information. For example, the processor 130 may determine whether the vehicle's mechanical state information (e.g., tire pressure information or engine overheat information) is suitable for general driving conditions. When the vehicle state is not suitable for general driving conditions, the processor 130 may determine that normal autonomous driving is impossible. For example, the processor 130 may determine that normal autonomous driving is impossible when the vehicle cannot travel due to tire pressure or engine overheat.

According to the embodiment, the processor 130 may determine whether an environment around the vehicle is suitable for an operation design domain (ODD) of autonomous driving based on at least one among the surrounding environment information. The operation design domain may represent a condition for the surrounding environment in which autonomous driving normally operates. The processor 130 may determine that normal autonomous driving is impossible when the surrounding environment information of the vehicle does not match the operation design domain.

According to various embodiments, when the normal autonomous driving is impossible, the processor 130 may determine it as a situation in which the MRM to minimize the risk of an accident is required. The processor 130 may determine the MRM type in a situation in which the MRM execution is needed. The processor 130 may select at least one MRM type among a plurality of MRM types, in a situation where execution of the MRM is needed.

According to the embodiment, as illustrated in FIG. 2, the minimal risk maneuver (MRM) types may include straight stop 201, in-lane stop 202, adjacent lane stop 203, shoulder stop 204, and parking lane stop 205.

The straight stop 201 is a type of stopping the vehicle using a longitudinal deceleration function only, and lateral control is not accompanied. According to an embodiment, the type of straight stop may be selected when the lateral control, acceleration (or longitudinal acceleration), lane change, and safe area detection are impossible, and only deceleration (or longitudinal deceleration) is possible. For example, the type of straight stop may be performed in a situation where lane detection is impossible and lateral control is impossible due to a defect of an actuator.

The type of in-lane stop 202 is a type of stopping the vehicle within a boundary of a lane in which the vehicle travels. For example, the type of in-lane stop 202 may mean a type of stopping the vehicle within a boundary of a lane in which the vehicle is traveling through lateral control and/or deceleration. The lane in which the vehicle is traveling may mean a lane in which the vehicle is traveling at a time point when it is determined that the MRM execution is needed. The type of in-lane stop 202 may be selected when deceleration and lateral control are possible and acceleration, lane change, and safe area detection are impossible.

The type of adjacent lane stop 203 is a type of stopping the vehicle within a boundary of a lane adjacent to the lane in which the vehicle is traveling. For example, the type of adjacent lane stop 203 may mean a type of stopping a vehicle by moving into a lane adjacent to the lane in which the vehicle is traveling and then stopping the vehicle within the lane into which the vehicle moves. The lane in which the vehicle is traveling may mean a lane in which the vehicle is traveling at a time point when it is determined that the MRM execution is needed. The type of adjacent lane stop 203 may be selected when lateral control, acceleration, deceleration, and lane change are possible and safe area detection is impossible.

The type of shoulder stop 204 is a type of stopping the vehicle such that at least a portion of the vehicle is positioned on a shoulder of a road, and lane change may be accompanied. For example, the type of shoulder stop 204 may mean a type of stopping the vehicle such that the vehicle as a whole or a portion of the vehicle moves to be out of the boundary of a road (or a boundary of the outermost lane) and is positioned on a shoulder of a road through longitudinal acceleration, longitudinal deceleration, and/or lateral control. The type of shoulder stop 204 may be selected when lateral control, acceleration, deceleration, lane change, and safe area detection are possible.

The type of parking lane stop 205 is a type of stopping the vehicle within a boundary of a parking lane. For example, the type of parking lane stop 205 may mean a type of stopping the vehicle such that the vehicle moves into the parking lane and stops within the parking lane through longitudinal acceleration, longitudinal deceleration, and/or lateral control. The type of parking lane stop 205 may be selected when lateral control, acceleration, deceleration, lane change, and safe area detection are possible.

According to an embodiment, the processor 130 may determine the MRM type based on at least one among the vehicle state information and surrounding environment information. The processor 130 may check whether functions determined as selection components for selecting the MRM among the functions needed for autonomous driving are normally operable based on the vehicle state information, and may select the MRM type based on the functions that normally operate. The functions determined to be the selection components may include, as illustrated in FIG. 2, lateral control, acceleration, deceleration, lane change, and safe area detection. The listed functions are merely examples for helping understanding, and the selection components for the MRM are not limited thereto. For example, lane detection and/or powertrain control may be determined to be the selection components for the MRM.

According to an embodiment, the processor 130 may select the type of straight stop 201 to be the MRM type when only the deceleration function operates normally among the selection components for the MRM. According to an embodiment, the type of straight stop 201 may be selected when critical disorder in the vehicle is sensed, but an exact state cannot be figured out. When the type of straight stop 201 is selected to be the MRM type, the processor 130 may travel in a linear direction of a direction in which the vehicle travels, while controlling a speed of the vehicle to be reduced gradually until the speed thereof becomes 0 through the deceleration function. At this instance, the processor 130 may control the vehicle such that the vehicle does not stop sharply, but stops through a constant deceleration.

According to an embodiment, the processor 130 may select the type of in-lane stop 202 to be the MRM type when only the deceleration function and the lateral control function operate normally among the selection components for the MRM. When the type of in-lane stop 202 is selected to be the MRM type, the processor 130 may control the vehicle such that the vehicle stops within the lane through the deceleration function, while controlling the vehicle not to be out of a boundary of the lane in which it is traveling through the lateral control function. At this instance, the processor 130 may control the vehicle not to stop sharply, but stops through a constant deceleration.

According to an embodiment, the processor 130 may select the type of adjacent lane stop 203 to be the MRM type when the functions (e.g., lateral control, acceleration, deceleration, and lane change) except the safe area detection function operate normally among the selection components for the MRM. When the type of adjacent lane stop 203 is selected to be the MRM type, the processor 130 may control the vehicle to move into a lane adjacent to the lane in which it is traveling through the acceleration, the lateral control and/or the lane change functions, and to stop within the adjacent lane through the deceleration function.

According to an embodiment, the processor 130 may select the type of shoulder stop 204 or the type of parking lane stop 205 to be the MRM type when all the functions operate normally among the functions determined to be the selection components for the MRM. When the type of shoulder stop or the type of parking lane stop 205 is selected to be the MRM type, the processor 130 may control the vehicle to move into the shoulder or the parking lane which are safe areas through the acceleration, the lateral control, the lane change, and/or the safe area detection functions, and to stop on the shoulder or within the parking lane through the deceleration function.

According to an embodiment, the processor 130 may select at least one type among the type of shoulder stop 204 and the type of parking lane stop 205 to be the MRM type based on the surrounding environment information when all the functions operate normally among the functions determined to be the selection components for the MRM. For example, the processor 130 may search a safe area nearest to the vehicle among safe areas where the vehicle can stop based on the surrounding environment information, and may select the MRM type according to a type of the safe area. The safe areas where the vehicle can stop may mean a shoulder not occupied by an obstacle (e.g., other vehicle, a pedestrian, an object), or a parking lane not occupied by the obstacle. For example, the processor 130 may select the type of shoulder stop 204 when the safe area nearest to the vehicle is a shoulder, and select the type of parking lane stop 205 when the safe area nearest to the vehicle is a parking lane.

According to an embodiment, when the selected MRM type is one among types of the straight stop 201, the in-lane stop 202, the adjacent lane stop 203, the shoulder stop 204, and the parking lane stop 205, the processor 130 may determine whether vehicle stopping according to the selected MRM type (or emergency stopping) is completed within a specified time. When vehicle stopping according to the selected MRM type is not completed within the specified time, the processor 130 may change the MRM type to the straight stop type, and control the vehicle to perform the straight stop.

According to various embodiments, the processor 130 may control the vehicle to notify information that the MRM is underway to another vehicle and/or the driver while performing control operation to stop the vehicle according to the MRM type. For example, the processor 130 may control the display 140 to notify the driver that the MRM is underway. As another example, the processor 130 may control the communication apparatus 150 to notify another vehicle that the MRM is underway. These are merely examples for helping understanding, and a manner of notifying that the MRM is underway is not limited thereto.

According to various embodiments, the processor 130 may perform the control operation to stop the vehicle according to the determined MRM type and may determine whether a minimal risk condition (MRC) is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined MRM type. When the vehicle 100 gets into a state where the speed is 0, the processor 130 may determine that the MRC is satisfied.

According to various embodiments, when the MRC is satisfied, the processor 130 may end the MRM operation and switch the autonomous driving system (ADS) to a standby mode or an off-state. According to the embodiment, the processor 130 may control the autonomous driving system (ADS) to be transferred to the driver (or user) after switching the autonomous driving system (ADS) to the standby mode or off-state.

According to various embodiments, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information indicating whether various components included in the vehicle and/or at least one function of the vehicle is normally operated, and information indicating the driving state of the vehicle. The driving state of the vehicle may include, for example, at least one among a state in which the vehicle is autonomously driving, a state in which the MRM is underway, a state in which the MRM is completed, and a state in which autonomous driving is ended.

According to various embodiments, the communication apparatus 150 may communicate with an external device of the vehicle 100. According to embodiments, the communication apparatus 150 may receive data from the external device of the vehicle 100 or transmit data to the external device of the vehicle 100 under the control of the processor 130. For example, the communication apparatus 150 may perform communication using a wireless communication protocol or a wired communication protocol.

In FIG. 1 described above, the controller 120 and the processor 130 have been described as separate components, but according to various embodiments, the controller 120 and the processor 130 may be integrated into one component.

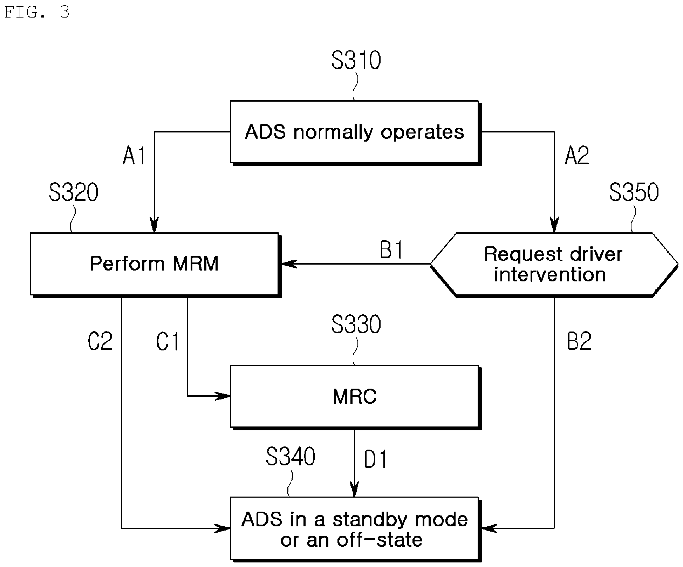

FIG. 3 is a flowchart illustrating operations of the vehicle according to various embodiments of the present disclosure. The vehicle of FIG. 3 may be the vehicle 100 of FIG. 1.

Referring to FIG. 3, the vehicle 100 may normally operate the ADS in an operation S310.

According to an embodiment, the vehicle 100 may monitor the vehicle state and the surrounding environment while performing the autonomous driving according to the normal operation of the ADS. The vehicle 100 may sense whether the MRM is needed based on information obtained by monitoring the vehicle state and the surrounding environment. If the MRM is needed, an event A1 may be generated.

According to the embodiment, the vehicle 100 may sense whether the driver (or user) intervention is required while performing the autonomous driving according to the normal operation of the ADS. When driver intervention is required, the vehicle 100 may perform a Request To Intervene (RTI) through the ADS or issue a warning. The driver intervention request or warning may be an event A2. The vehicle 100 may proceed to an operation S320 when the event A1 occurs in a state in which the ADS is normally operated.

When the event A2 occurs in a state in which the ADS operates normally, in an operation S350, the vehicle 100 may determine whether the driver intervention is sensed within a specified time. The vehicle 100 may determine that an event B1 has occurred when no driver intervention is sensed within the specified time. When the event B1 occurs, the vehicle 100 may proceed to an operation S320. The vehicle 100 may determine that an event B2 has occurred when the driver intervention is sensed within a specified time. When the event B2 occurs, the vehicle 100 may proceed to an operation S340.

The vehicle 100 may perform the MRM in the operation S320. According to an embodiment, the vehicle 100 may determine the MRM type based on at least one among the vehicle state information and the surrounding environment information. As illustrated in FIG. 2, the MRM type may include the types of the straight stop 201, the in-lane stop 202, the adjacent lane stop 203, the shoulder stop 204, and the parking lane stop 205. The vehicle 100 may control at least one component in the vehicle to stop the vehicle according to the determined MRM type. According to an embodiment, the vehicle 100 may notify information indicating that the vehicle executes the MRM to another vehicle and/or the driver. According to an embodiment, the vehicle 100 may activate an MRM operating lamp when the MRM is initiated, and may notify another vehicle and/or the driver that the MRM is underway through the activated MRM operating lamp.

In an operation S320, the vehicle 100 may determine whether the minimal risk condition is satisfied as the speed of the vehicle becomes 0 through execution of the MRM. When the minimal risk condition is satisfied, the vehicle 100 may determine that an event C1 has occurred and proceed to an operation S330. The vehicle 100 may determine whether the driver's intervention is sensed while the MRM is underway. When the driver's intervention is sensed, the vehicle 100 may determine that an event C2 has occurred and proceed to the operation S340.

In the operation S330, the vehicle 100 may maintain a state in which the minimal risk condition is satisfied. The state in which the minimal risk condition is satisfied may mean a state in which the vehicle is stopped. For example, the vehicle 100 may maintain a stopped state. For example, the vehicle 100 may perform control operation for maintaining the vehicle in a stopped state regardless of an inclination of a road surface of the stopped position. The vehicle 100 may determine whether an event D1 occurs while maintaining a state in which the minimal risk condition is satisfied. The event D1 may include at least one among ADS being turned off the by the driver, and completion to transfer the vehicle control authority to the driver. When the event D1 occurs, the vehicle 100 may proceed to the operation S340.

The vehicle 100 may switch the ADS into a standby mode or an off-state in the operation S340. The vehicle 100 may not perform operation for the autonomous driving while the ADS is in a standby mode or an off-state.

The operations S310, S320, S330, and S350 described above may be in a state in which the ADS is activated, and the operation S340 may be in a state in which the ADS is inactive.

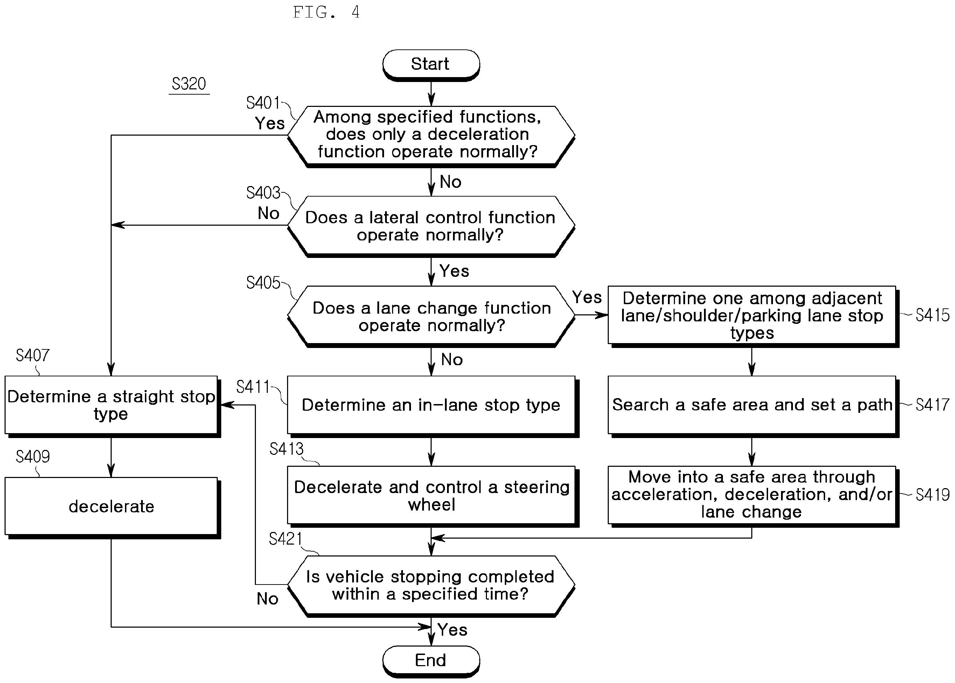

FIG. 4 is a flowchart illustrating execution of the minimal risk maneuver by the vehicle according to various embodiments of the present disclosure. The operations of FIG. 4 may be the detailed operations of the operation S320 of FIG. 3. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120.

Referring to FIG. 4, the vehicle 100 may check whether the deceleration function among the functions specified as the selection components for the MRM normally operates, based on the vehicle state information, in an operation S410. According to the embodiment, the vehicle 100 may check whether the functions specified as the selection components for the MRM among the functions needed for the autonomous driving normally operate, based on the vehicle state information. For example, the functions specified as the selection components for the MRM may include the lateral control function, the acceleration function, the deceleration function, the lane change function, and the safe area detection function. These functions are merely examples for helping understanding, and the functions specified as the selection components for the MRM are not limited thereto. For example, along with the above-described functions, the lane detection function and/or the powertrain control may be specified as the selection components for the MRM.

When only the deceleration function operates normally among the selection components for the MRM, the vehicle 100 may select the type of straight stop 201 to be the MRM type in an operation S407. For example, the vehicle 100 may determine the straight stop type to be the MRM type, when only the deceleration is possible, and the lateral control function, the acceleration function, the lane change function, and the safe area detection function are impossible.

In an operation S409, the vehicle 100 may control a speed of the vehicle such that a speed of the vehicle decelerates in a state in which a direction in which the vehicle travels is maintained, by controlling the deceleration function of the vehicle. The vehicle 100 may control the speed of the vehicle to gradually decelerate through the deceleration function, while maintaining the direction in which the vehicle travels so as to stop the vehicle according to the straight stop type. At this instance, the vehicle 100 may control the speed to decelerate based on a constant deceleration without stopping sharply. According to an embodiment, the vehicle 100 may notify information that the vehicle performs the MRM of the straight stop type to the driver (or a passenger), and/or another vehicle through at least one component in the vehicle (e.g., the display, the communication apparatus, the MRM operating lamp). According to an embodiment, the vehicle 100 may control not to exceed a maximum deceleration value, of which the deceleration value is specified to be, for example, about 4m/s².

When the vehicle stopping according to the straight stop type is completed, the vehicle 100 may end the operations of FIG. 4, and may proceed to the operation S330 in FIG. 3.

When the deceleration function operates normally among the functions specified as the selection components for the MRM, and at least one other function except the deceleration function operates normally, the vehicle 100 may check whether the lateral control function operates normally in an operation S405.

When the lateral control function does not operate normally, the vehicle 100 may proceed to the operation S407. For example, when functions that operate normally among the functions specified as selection components for the MRM are the acceleration function, the deceleration function, the lane detection function, and the safe area detection function, because the lateral control is impossible, the vehicle 100 may proceed to the operation S407, determine the straight stop type to be the MRM type, and perform the subsequent operations.

When the lateral control function operates normally, the vehicle 100 may determine whether the lane change function operates normally in the operation S405.

When the lane change function does not operate normally, the vehicle 100 may determine the in-lane stop type to be the MRM type. For example, the vehicle 100 may determine the in-lane stop type to be the MRM type when among the functions specified as the selection components for the MRM, the deceleration function and the lateral control function operate normally, and the lane change function does not operate normally.

In an operation S413, the vehicle 100 may control to stop within the lane in which the vehicle is traveling, through deceleration and steering wheel control. For example, in order to stop the vehicle according to the in-lane stop type, the vehicle 100 may control the speed to gradually decelerate in the lane in which the vehicle is traveling through the deceleration function, while controlling not to leave the lane in which the vehicle is traveling through the lateral control. According to an embodiment, the vehicle 100 may control not to exceed the maximum deceleration value, of which the deceleration value is specified to be, for example, about 4m/s².

According to an embodiment, the vehicle 100 may control not to be out of the lane in which the vehicle travels using a known technology such as the LKAS (Lane Keeping Assistance System). For example, through the lateral control, the vehicle 100 may not leave the lane by travelling about a center line of both boundaries of the lane in which the vehicle travels.

According to an embodiment, when the lane detection fails while performing the in-lane stop, the vehicle 100 may maintain to be in the lane in which it is traveling by maintaining an angle of the steering wheel. The vehicle 100 may maintain to be in the lane using the LKAS when the lane detection is successful in a state in which vehicle 100 maintains to be in the lane through the angle of the steering wheel. The vehicle 100 may control to decelerate based on constant deceleration without sharp stopping when the vehicle 100 stops within the lane. According to an embodiment, when the in-lane stop is determined, the vehicle 100 may notify information that the vehicle performs the MRM of the in-lane stop type to the driver (or a passenger), and/or another vehicle through at least one component in the vehicle (e.g., the display, the communication apparatus).

When the lane detection function operates normally, the vehicle 100 may determine at least one among the adjacent lane stop type, the shoulder stop type, and the parking lane stop type to be the MRM type in an operation S415. According to an embodiment, additionally considering whether the safe area detection function operates normally, the vehicle 100 may determine at least one among the adjacent lane stop type, the shoulder stop type, and the parking lane stop type to be the MRM type. For example, the vehicle 100 may determine the adjacent lane stop type to be the MRM type when the deceleration function, the lateral control function and the lane change function operate normally but the safe area detection function does not operate normally. As another example, when all the deceleration function, the lateral control function, the lane change function, and the safe area detection function operate normally, the vehicle 100 may determine the shoulder stop type or the parking lane stop type to be the MRM type.

**In** an operation S417, the vehicle 100 may search the safe area and may set a path for moving into the safe area. According to an embodiment, the vehicle 100 may search the safe area based on the surrounding environment information, and determine one among the shoulder stop type and the parking lane stop type to be the MRM type based on the searched safe area. For example, the vehicle 100 may search the nearest safe area among the safe areas where the vehicle can stop based on the surrounding environment information, and determine the MRM type according to a type of the nearest safe area. The safe areas where the vehicle can stop may mean a shoulder not occupied by an obstacle (e.g., other vehicle, a pedestrian, an object), or a parking lane not occupied by the obstacle. For example, the vehicle 100 may select the type of shoulder stop when the searched safe area nearest to the vehicle is a shoulder, and select the type of parking lane stop when the searched safe area nearest to the vehicle is a parking lane. The surrounding environment information may be obtained from at least one sensor, and/or map data. When the shoulder or the parking lane which are safe areas is searched, the vehicle 100 may set a path for moving into the searched safe area.

In an operation S419, the vehicle 100 may move into the safe area through the acceleration, the deceleration, and/or the lane change. The vehicle 100 may move into the safe area along the path set for moving into the safe area by controlling at least one function among the acceleration, the deceleration, and the lane change and may stop in the safe area.

The vehicle 100 may determine whether vehicle stopping according to the MRM type determined in the operation S421 is completed within the specified time. The vehicle 100 may determine whether the vehicle stopping according to the determined MRM type is completed within the specified time from a time point when the MRM type is determined. For example, when the determined MRM type is the in-lane stop type, the vehicle 100 may determine whether the vehicle is stopped within the shoulder of a road in which the vehicle is traveling within the specified time from a time point when the road shoulder stop type is determined to be the MRM type. As another example, when the determined MRM type is the adjacent lane stop type, the vehicle 100 may determine whether the vehicle moves into a lane adjacent to the lane in which the vehicle is traveling and is stopped in a state in which the vehicle is positioned within the adjacent lane within a specified time from a time point when the adjacent lane stop type is determined. As another example, when the determined MRM type is the shoulder stop type, the vehicle 100 may determine whether the vehicle moves into the shoulder and is stopped in a state in which at least a portion of the vehicle is positioned on the shoulder within a specified time from a time point when the shoulder stop type is determined. As another example, when the determined MRM type is the parking lane stop type, the vehicle 100 determine whether the vehicle moves into the parking lane and is stopped in a state in which the vehicle is positioned in the parking lane within a specified time from a time point when the parking lane stop type is determined.

When vehicle stopping according to the determined MRM type is not completed within the specified time, the vehicle 100 may proceed to the operation S407, and may change the MRM type to the straight stop type. For example, when the in-lane stop type, the adjacent lane stop type, the shoulder stop type, or the parking lane stop type is not completed within the specified time, the vehicle 100 may change the MRM type to the straight stop type and perform the straight stop.

When vehicle stopping according to the determined MRM type is completed within the specified time, the vehicle 100 may end operations in FIG. 4, and may proceed to the operation S330 in FIG. 3.

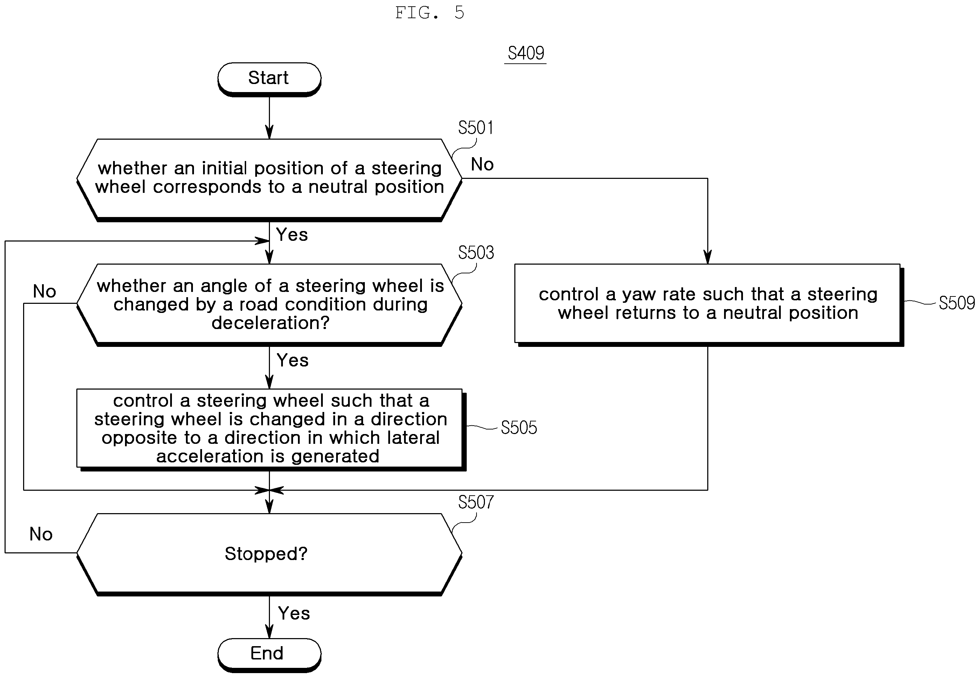

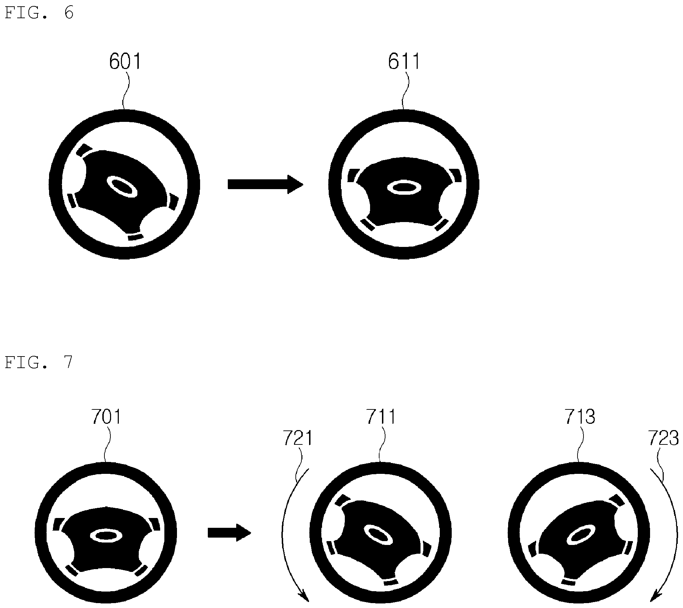

FIG. 5 is a flowchart illustrating execution of the straight stop by the vehicle according to various embodiments of the present disclosure. The operations of FIG. 5 may be the detailed operations of the operation S409 of FIG. 4. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120. At least some operation of FIG. 5 may be described by referring to FIGS. 6 and 7. FIGS. 6 and 7 are example illustrations of controlling the steering wheel by the vehicle while performing the straight stop according to various embodiments of the present disclosure.

Referring to FIG. 5, the vehicle 100 may determine whether the initial position of the steering wheel corresponds to a neutral position in an operation S501. According to an embodiment, the vehicle 100 may determine whether the initial position of the steering wheel corresponds to the neutral position, when the straight stop type is determined to be the MRM type. At a time point when the straight stop type is determined to be the MRM type, the vehicle 100 may measure a yaw rate, lateral acceleration, and lateral jerk, and may check whether the initial position of the steering wheel corresponds to the neutral position. Here, the lateral jerk may mean a differential value of the lateral acceleration.

When the initial position of the steering wheel does not correspond to the neutral position, the vehicle 100 may control the yaw rate such that the steering wheel returns to the neutral position in an operation S509. For example, as seen in a drawing 601 in FIG. 6, when the initial position of the steering wheel is not the neutral position, the vehicle 100 may make the position of the steering wheel return to the neutral position as seen in a drawing 611 by constantly reducing the yaw rate.

When the initial position of the steering wheel is the neutral position, in an operation S503, the vehicle 100 may determine whether an angle of the steering wheel is changed by a road condition during deceleration. For example, the vehicle 100 may determine whether the position of the steering wheel is changed to a position other than the neutral position by the road condition during deceleration, although the initial position of the steering wheel is the neutral position. The vehicle 100 may determine that the angle of the steering wheel is changed by the road condition, when the lateral acceleration occurs during deceleration in a state in which the steering wheel is at the neutral position. For example, when the road on which the vehicle is traveling is uneven, the angle of the steering wheel may be changed to a position in a drawing 711 or 713 due to the lateral acceleration generated by the road condition in a state in which the angle of the steering wheel is at the neutral position as the drawing 701 in FIG. 7.

When the angle of the steering wheel is changed by the road condition during deceleration, the vehicle 100 may control the steering wheel such that the steering wheel is changed in a direction opposite to a direction in which the lateral acceleration is generated. For example, as illustrated in FIG. 7, in order to return the steering wheel to the neutral position, the vehicle 100 may generate predetermined lateral acceleration in directions 721 and 723 which allow values of the lateral jerk and the lateral acceleration to be opposite to each other. In this case, the lateral acceleration in a neutral direction is applied to the steering wheel, thereby the steering wheel can return to the neutral position.

When the angle of the steering wheel is not changed by the road condition during deceleration, the vehicle 100 may determine whether the vehicle is stopped by deceleration. For example, the vehicle 100 may determine whether the speed of the vehicle is 0 by deceleration.

When the vehicle is not stopped, that is, when the vehicle is decelerating, the vehicle 100 may return to the operation S503, and re-perform the subsequent operations. For example, the vehicle 100 may control a traveling direction of the vehicle 100 to be a linear direction by checking the yaw rate, the lateral acceleration, and the lateral jerk on a regular basis before the straight stop is completed.

When the vehicle is in a stopped state, the vehicle 100 may end the operations of FIG. 5.

In the above-described FIG. 5, a speed at which the position of the steering wheel is restored to the neutral position when the initial position of the steering wheel is not the neutral position may be faster than a speed at which the position of the steering wheel is restored to the neutral position when the angle of the steering wheel is changed by the road condition.

It is highly likely that a case where the initial position of the steering wheel is not the neutral position may occur while the vehicle travels in a curved lane. For example, when a situation which needs the MRM occurs while the vehicle travels in a curved lane, the initial position of the steering wheel may not be the neutral position. Therefore, when the initial position of the steering wheel is not the neutral position, it is preferable to make a nearby vehicle and a driver of the nearby vehicle predict a motion of the corresponding vehicle in which the MRM is initiated, by changing the angle of the steering wheel slowly and constantly.

As described above, various embodiments of the present disclosure can improve stability by minimizing risk of the vehicle by determining the MRM type based on at least one function which can operate normally and performing the vehicle stopping according to the determined MRM type, when a situation in which the normal autonomous driving is impossible is sensed during the autonomous driving of the vehicle.

Hereinafter, a test on the straight stop type and the in-lane stop type and a condition for passing the test will be described.

First, a test process of the straight stop type is as below.
- A test course of the straight stop type is set to be a linear track without an obstacle.
- A subject vehicle is set to travel the test course at a constant speed Vsv (about 22m/s(±1m/s)), and the MRM is set to be initiated by the driver.
- When the MRM is initiated by the driver, the lateral control, the acceleration, the lane change, and the safe area detection functions among the functions of the vehicle are turned off and the deceleration function is maintained to be turned on so that the deceleration function operates normally.

The condition for passing the test of the straight stop type is as below.
- When the MRM is initiated, the MRM operating lamp must be activated.
- The fact that the MRM is operating must be notified to the driver.
- The driver must be able to control the vehicle.
- From a time point when the MRM is initiated to a time when the MRC is satisfied, the yaw rate must be reduced constantly.
- When the MRC is satisfied, the speed of the vehicle must be 0.
- A value of the deceleration must be smaller than or equal to a maximum value specified after the MRM is initiated. (e.g., about 4m/s²)
- The lateral jerk must be the opposite value to the lateral acceleration generated after the MRM is initiated.

Next, the condition for passing the test of the in-lane stop type is as below. A test process of the in-lane stop type may be divided into a process of a case where there is an obstacle and a process of a case where there is no obstacle.

### 1) A case where there is no obstacle

A test process of the in-lane stop type is as below.
- A test course of the in-lane stop type is set to be a curved track with no obstacle.
- A subject vehicle is set to travel the test course at a constant speed Vsv (about 22m/s(±1m/s)), and the MRM is set to be initiated by the driver.
- When the MRM is initiated by the driver, the lateral control, and the lane change functions among the functions of the vehicle are turned off and the deceleration, the lateral control, and the safe area detection functions are maintained to be turned on so that the deceleration, the lateral control, and the safe area detection functions operate normally.

The condition for passing the test of the in-lane stop type is as below.
- The fact that the MRM is operating must be notified to the driver.
- The vehicle must not leave the current lane until the speed thereof becomes 0.
- An average of the deceleration during the MRM execution must be smaller than or equal to the maximum deceleration (e.g., about 4m/s²)

### 2) A case where there is an obstacle.

A test process of the in-lane stop type is as below.
- A test course of the in-lane stop type is set to be a linear track with an obstacle.
- A subject vehicle is set to travel the test course at a constant speed Vsv (about 22m/s(±1m/s)), and is set to travel toward an object positioned within the current lane.
- The MRM is set to be initiated by the driver.
- When the MRM is initiated by the driver, the acceleration, and the lane change functions among the functions of the vehicle are turned off and the deceleration, the lateral control, and the safe area detection functions are maintained to be turned on so that the deceleration, the lateral control, and the safe area detection functions operate normally.
- A method for calculating a likelihood of a collision and a method for controlling a safety system comply with the existing standards such as ISO 22839(FVCMS) and ISO 19237(PDCMS).

The condition for passing the test of the in-lane stop type is as below.
- The fact that the MRM is operating must be notified to the driver.
- The vehicle must not leave the current lane until the speed thereof becomes 0.
- An average of the deceleration during the MRM execution must be smaller than or equal to the maximum deceleration (e.g., about 4m/s²)
- When there is a likelihood of a collision, the average deceleration must exceed the maximum deceleration of the MRM.

That is, when the vehicle according to the various embodiments of the present disclosure performs the vehicle stopping according to the straight stop type or the in-lane stop type, the vehicle must operate so as to satisfy the above-described test conditions.

In one or more exemplary embodiments, the functions described may be implemented in hardware, software, firmware, or any combination thereof. If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

When the embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. **In** addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

## Claims

1. An autonomous driving vehicle, comprising:
at least one sensor configured to sense surrounding environment of the vehicle to generate surrounding environment information;
a processor configured to monitor state of the vehicle to generate vehicle state information and to control autonomous driving of the vehicle; and
a controller configured to control operation of the vehicle according to the control of the processor,
wherein the processor is configured to:
sense whether a minimal risk maneuver is needed based on at least one among the surrounding environment information and the vehicle state information during autonomous driving of the vehicle;
determine a type of the minimal risk maneuver based on normally operating functions among functions specified for the minimal risk maneuver when the minimal risk maneuver is needed; and
control the vehicle to stop based on the determined type of the minimal risk maneuver,
wherein the functions specified for the minimal risk maneuver comprise at least one among a lateral control function, an acceleration function, a deceleration function, a lane change function, and a safe area detection function.

2. The autonomous driving vehicle of claim 1,
wherein the processor is configured to:
determine a straight stop type to be the type of the minimum risk maneuver when only the deceleration function operates normally among the specified functions, or when the deceleration function operates normally, and the lateral control function does not operate normally among the specified functions; and
control the vehicle to stop using the deceleration function.

3. The autonomous driving vehicle of claim 2,
wherein the processor is configured to control the vehicle to decelerate based on specified deceleration while maintaining a direction in which the vehicle travels, when the straight stop type is determined to be the type of the minimum risk maneuver.

4. The autonomous driving vehicle of claim 3,
wherein the processor is configured to:
check whether a position of a steering wheel of the vehicle is a neutral position, when the straight stop type is determined to be the type of the minimum risk maneuver; and
control a yaw rate of the vehicle such that the position of the steering wheel is in a neutral position, when the position of the steering wheel of the vehicle is not a neutral position.

5. The autonomous driving vehicle of claim 4,
wherein the processor is configured to:
sense that the position of the steering wheel is changed according to a road condition while the vehicle travels; and
generate lateral acceleration so that the steering wheel of the vehicle returns to a neutral position.

6. The autonomous driving vehicle of claim 1,
wherein the processor is configured to:
determine an in-lane stop type to be the type of the minimum risk maneuver when among the specified functions, the deceleration function and the lateral control function operate normally and the lane change function does not operate normally; and
control the vehicle to stop using the deceleration function while controlling the vehicle not to be out of a lane in which the vehicle travels using the lateral control function.

7. The autonomous driving vehicle of claim 6,
wherein the processor is configured to control the vehicle not to be out of the lane in which the vehicle travels using an LKAS (Lane Keeping Assistance System), when the in-lane stop type is determined to be the type of the minimum risk maneuver.

8. The autonomous driving vehicle of claim 6,
wherein the processor is configured to control an angle of the steering wheel to be maintained, when the processor fails in sensing the lane in which the vehicle travels.

9. The autonomous driving vehicle of claim 1,
wherein the processor is configured to
determine an adjacent lane stop type to be the type of the minimum risk maneuver when among the specified functions, the deceleration function, the lateral control function, and the lane change function normally operate, and the safe area detection function does not normally operate; and
control the vehicle to move into a lane adjacent to the lane in which the vehicle travels using the deceleration function, the lateral control function, and the lane change function, and then, to stop in the adjacent lane.

10. The autonomous driving vehicle of claim 1,
wherein the processor is configured to:
determine a shoulder stop type or a parking lane stop type to be the type of the minimum risk maneuver according to a type of a safe area nearest to the vehicle when among the specified functions, the deceleration function, the lateral control function, and the lane change function, and the safe area detection function normally operate;
control the vehicle to stop in a state in which at least a portion of the vehicle is positioned on the shoulder through the deceleration function, the lateral control function, the lane change function, and the safe area detection function, when the shoulder stop type is determined; and
control the vehicle to move into a parking lane and to stop within a boundary of the parking lane through the deceleration function, the lateral control function, the lane change function, and the safe area detection function, when the parking lane stop type is determined,
wherein the type of the safe area includes at least one among a shoulder and a parking lane.

11. A method for operating an autonomous driving vehicle, comprising:
sensing surrounding environment of the vehicle during autonomous driving of the vehicle and obtaining surrounding environment information;
monitoring state of the vehicle during the autonomous driving of the vehicle and obtaining vehicle state information;
sensing whether a minimal risk maneuver is needed based on at least one among the surrounding environment information and the vehicle state information during autonomous driving of the vehicle;
determining a type of the minimal risk maneuver based on a normally operating function among functions specified for the minimal risk maneuver when the minimal risk maneuver is needed; and
controlling the vehicle to stop based on the determined type of the minimal risk maneuver,
wherein the functions specified for the minimal risk maneuver comprise at least one among a lateral control function, an acceleration function, a deceleration function, a lane change function, and a safe area detection function.

12. The method of claim 11,
wherein the determining a type of the minimal risk maneuver comprises determining a straight stop type to be the type of the minimal risk maneuver when only the deceleration function operates normally among the specified functions, or when the deceleration function operates normally, and the lateral control function does not operate normally among the specified functions, and
wherein the controlling the vehicle to stop comprises controlling the vehicle to stop using the deceleration function.

13. The method of claim 12,
wherein the controlling the vehicle to stop further comprises controlling the vehicle to maintain a direction in which the vehicle travels.

14. The method of claim 13,
wherein the controlling the vehicle to maintain a direction in which the vehicle travels comprises:
checking whether a position of a steering wheel of the vehicle is a neutral position, when the straight stop type is determined to be the type of the minimum risk maneuver; and
controlling a yaw rate of the vehicle such that the position of the steering wheel is a neutral position, when the position of the steering wheel of the vehicle is not a neutral position.

15. The method of claim 14, further comprising:
sensing that the position of the steering wheel is changed according to a road condition while the vehicle travels, and
generating lateral acceleration so that the steering wheel of the vehicle returns to a neutral position.

16. The method of claim 11,
wherein the determining a type of the minimal risk maneuver comprises determining an in-lane stop type to be the type of the minimum risk maneuver when among the specified functions, the deceleration function and the lateral control function operate normally and the lane change function does not operate normally, and
wherein the controlling the vehicle to stop comprises controlling the vehicle to stop using the deceleration function while controlling the vehicle not to be out of a lane in which the vehicle travels using the lateral control function.

17. The method of claim 16,
wherein the controlling the vehicle not to be out of a lane in which the vehicle travels using the lateral control function comprises controlling the vehicle not to be out of the lane in which the vehicle travels using an LKAS (Lane Keeping Assistance System).

18. The method of claim 16, further comprising:
controlling an angle of the steering wheel to be maintained so that the vehicle does not move to be out of the lane in which the vehicle travels, when failed in sensing the lane in which the vehicle travels.

19. The method of claim 1,
wherein the determining a type of the minimal risk maneuver comprises determining an adj acent lane stop type to be the type of the minimum risk maneuver when among the specified functions, the deceleration function, the lateral control function, and the lane change function normally operate, and the safe area detection function does not normally operate, and
wherein the controlling the vehicle to stop comprises controlling the vehicle to move into a lane adjacent to the lane in which the vehicle travels using the deceleration function, the lateral control function, and the lane change function, and then, to stop in the adjacent lane.

20. The method of claim 11,
wherein the determining a type of the minimal risk maneuver comprises determining a shoulder stop type or a parking lane stop type to be the type of the minimum risk maneuver according to a type of a safe area nearest to the vehicle when among the specified functions, the deceleration function, the lateral control function, and the lane change function, and the safe area detection function normally operate, and
wherein the controlling the vehicle to stop comprises:
controlling the vehicle to stop in a state in which at least a portion of the vehicle is positioned on the shoulder through the deceleration function, the lateral control function, the lane change function, and the safe area detection function, when the shoulder stop type is determined;
controlling the vehicle to move into a parking lane and to stop within a boundary of the parking lane through the deceleration function, the lateral control function, the lane change function, and the safe area detection function, when the parking lane stop type is determined, and
wherein the type of the safe area includes at least one among a shoulder and a parking lane.
